# EUROPEAN PATENT APPLICATION

(11) **EP 2 465 714 A1**
(43) Date of publication of application: **20.06.2012**
(21) Application number: 11193163.0
(22) Date of filing: 13.12.2011
(51) Int. Cl.: B60H 1/00

(54) **Vehicle air-conditioning control apparatus**

(30) Priority: 17.12.2010 JP 2010281537
(71) Applicant: Calsonic Kansei Corporation, Saitama-shi Saitama 331-8501 (JP)
(72) Inventor: Mori, Yoshiteru, Saitama, 331-8501 (JP)
(74) Representative: Ilgart, Jean-Christophe

(57) **Abstract**

During a no-idling state, the opening of an air mix door (80) is corrected in such a direction as to prolong a period of time in which the state of air conditioning before the no-idling state is sustainable, according to the state of air conditioning before the no-idling state and a target blow-off temperature during the no-idling state. Thereby, even when a compressor is stopped, a period of time in which a feeling of coolness or warmth is sustainable is prolonged, thus prolonging a no-idling time.

## Description

The present invention relates to a vehicle air-conditioning control apparatus capable of prolonging a period of time in which a feeling of coolness is sustainable during cooling operation, and capable of prolonging a period of time in which a feeling of warmth is sustainable during heating operation, even when a compressor is in a stopped state during no-idling state, in a vehicle equipped with what is known as the idle-reduction function of stopping an engine at the time of idling.

Recently, for an improvement in fuel economy, a vehicle equipped with the idle-reduction function of stopping an engine at the time of idling has been in practical use.

With such a vehicle equipped with the idle-reduction function, the stopping of the vehicle leads to the stopping of the engine, and thus to the stopping of a compressor driven by the engine, hence resulting in the stopping of an air-conditioning apparatus of the vehicle.

Therefore, for example in the course of cooling operation, the stopping of the engine leads to the stopping of the cooling operation and thus to a rise in temperature in the vehicle's interior, which, in turn, gives a feeling of discomfort to a driver or an occupant.

To avoid this, there has been a proposal of a vehicle air-conditioning apparatus including a second compressor driven by a battery, in which, when an engine is stopped, the second compressor is driven by a motor to keep on with cooling operation. (Refer to Japanese Patent Application Publication No. 2003-80937.)

However, according to the invention described in Patent Document 1, it is necessary to mount the second compressor that does not use the engine as a driving source, and thus, the air-conditioning apparatus becomes complicated in structure. Also, there is a deterioration in vehicle mountability, and it is necessary to drive the second compressor, thus leading to the problem of causing an increase in power consumption.

An object of the present invention is to provide a vehicle air-conditioning control apparatus capable of prolonging a period of time in which a feeling of coolness is sustainable during cooling operation, and capable of prolonging a period of time in which a feeling of warmth is sustainable during heating operation, even when a compressor is stopped under no-idling state.

In order to attain the above object, the vehicle air-conditioning control apparatus according to the present invention is configured as follows. When an engine is stopped under a no-idling state, the opening of an air mix door is corrected in such a direction as to prolong a period of time in which the state of air conditioning in the vehicle's interior before the no-idling state is sustainable, based on the state of air conditioning in the vehicle's interior before the stopping of the engine and a target blow-off temperature calculated by the vehicle air-conditioning control apparatus. Thereby, a period of time in which a feeling of coolness or warmth is sustainable is prolonged, thus extending a time duration of the no-idling state.

Specifically, a vehicle air-conditioning control apparatus according to one embodiment of the present invention includes an intake door mounted on a vehicle having an idle-reduction function, the intake door making selection between introduction of air outside the vehicle and introduction of air inside the vehicle, with an opening of the intake door; a blower fan that controls an amount of the air introduced through the intake door, with a fan speed of the blower fan; an evaporator that cools the air blown by the blower fan, by using a refrigerant; a heater core that allows a further passage of the air that has passed through the evaporator, and warms the air by using engine cooling water of the vehicle; an air mix door that adjusts a mixture amount of cool air cooled by passing only through the evaporator and warm air warmed by passing through the heater core after passing through the evaporator, with an opening of the air mix door; a vehicle's interior temperature sensor that measures temperature in a vehicle's interior; an air-conditioning operation unit that provides a command for a set temperature in the vehicle's interior; and an air-conditioning controller that performs control on the state of air conditioning in the vehicle's interior.

Before a no-idling state, the air-conditioning controller performs the control on the state of air conditioning in the vehicle's interior, based on at least the set temperature for which the air-conditioning operation unit provides the command, and, during the no-idling state, the air-conditioning controller performs control to correct the opening of the air mix door in such a direction as to prolong a period of time in which the state of air conditioning in the vehicle's interior before the no-idling state is sustainable, based on the state of air conditioning before the no-idling state and a target blow-off temperature calculated using at least the set temperature and the temperature in the vehicle's interior measured by the vehicle's interior temperature sensor during the no-idling state.
FIG. 1 is a block diagram showing in schematic form a configuration of a vehicle air-conditioning control apparatus according to a first embodiment of the present invention.
FIG. 2 is a flowchart showing the flow of operation of the first embodiment of the present invention.
FIG. 3 is a diagram of assistance in explaining an opening direction of an air mix door.
FIG. 4 is a table showing the contents of a map for determining the amount of opening correction of the air mix door.
FIG. 5 is a flowchart showing the flow of operation for opening correction of the air mix door and fan speed control of a blower fan in the first embodiment of the present invention.

Embodiments of a vehicle air-conditioning control apparatus according to the present invention will be described below with reference to the drawings.

### (FIRST EMBODIMENT)

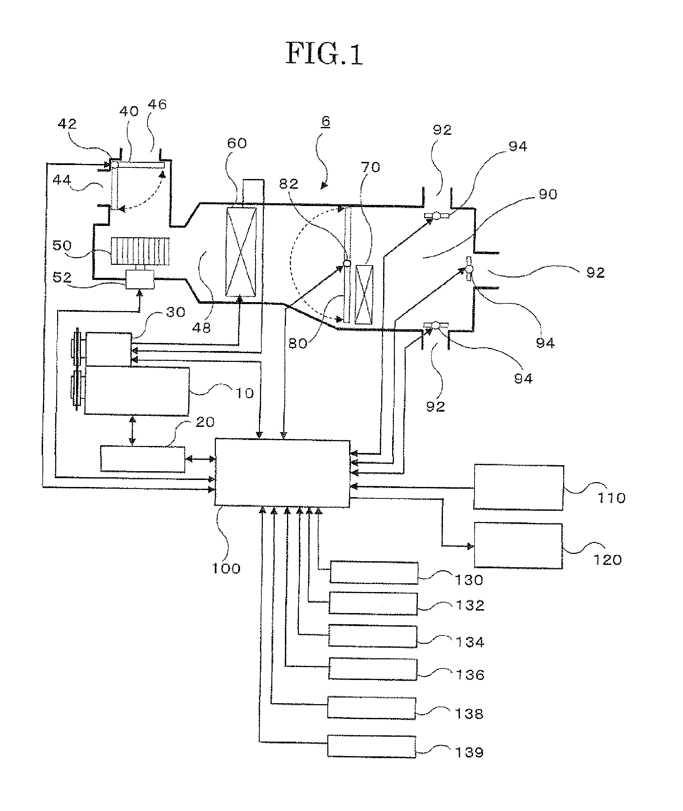

The embodiment is the present invention as applied to a vehicle air-conditioning control apparatus mounted on a vehicle having an idle-reduction function. The embodiment of the present invention will be described below following FIG. 1.

The apparatus includes an idle-reduction controller 20 installed in a vehicle 5 (not shown in FIG. 1), which detects the stopping of the vehicle 5 and stops an engine 10, and further, detects driver's accelerator operation, braking operation or steering operation, or temperature variations in the vehicle's interior, or the like and restarts the engine 10; a compressor 30 driven by the engine 10, which applies pressure to a refrigerant; an air-conditioning unit 6 installed in the vehicle's interior, which performs control on the state of air conditioning in the vehicle's interior; an air-conditioning controller 100 that provides a control command to the air-conditioning unit 6; sensors that measure information required to determine the substance of the control command which the air-conditioning controller 100 gives to the air-conditioning unit 6, namely, an outside-air temperature sensor 130 that makes outside-air temperature measurements, a vehicle's interior temperature sensor 132 that makes measurements of temperature in the vehicle's interior, a blow-off temperature sensor 134 that measures the temperature of blow-off openings 92, a solar radiation quantity sensor 136 that measures the amount of solar radiation to which the vehicle 5 is exposed, a water temperature sensor 138 that measures the temperature of cooling water of the engine 10, and an evaporator temperature sensor 139 that measures air temperature after passing through an evaporator 60; an air-conditioning operation unit 110 by which an occupant of the vehicle 5 gives a command for a set temperature in the vehicle's interior; and an air-conditioning display unit 120 that visually displays the state of operation of the air-conditioning unit 6.

Incidentally, the air-conditioning unit 6 includes an outside-air inlet 44 that introduces air outside the vehicle 5; an interior-air inlet 46 that introduces air in the vehicle's interior; an intake door 40 capable of swinging, which makes selection between interior-air introduction and outside-air introduction or determines a mixture ratio between the interior air and the outside air; an intake door driving unit 42 that effects swinging of the intake door 40; a blower fan 50 that blows the outside air, the interior air, or a mixture of them, introduced through the intake door 40, into an air flow path 48 provided inside the air-conditioning unit 6; a blower motor 52 that controls revolving speed of the blower fan 50 (hereinafter referred to as fan speed) thereby to control the rate of flow of air blown into the air flow path 48; the evaporator 60 (or a heat exchanger for air cooling) through which the refrigerant circulates; a heater core 70 (or a heat exchanger for air heating) through which cooling water fed from the engine 10 through a cooling water channel (not shown) circulates; an air mix door 80 capable of swinging, disposed between the evaporator 60 and the heater core 70; and an air mix door driving unit 82 that effects swinging of the air mix door 80.

Also, the air mix door 80 changes its opening θ thereby to enable controlling a mixture ratio between cool air that has passed only through the evaporator 60 and warm air that has passed through the heater core 70 after passing through the evaporator 60.

Further, a mixing chamber 90 in which the cool air that has passed through the evaporator 60 is mixed with the warm air that has passed through the heater core 70 is formed downstream from the heater core 70, and the mixing chamber 90 is provided with the blow-off openings 92 that communicate with a defroster grille, a vent grille, and a foot grille, respectively, in the vehicle's interior (none of which are shown), and doors 94 capable of swinging, which control the rate of flow of air blown into the blow-off openings 92, respectively, are arranged in the vicinity of the blow-off openings 92, respectively.

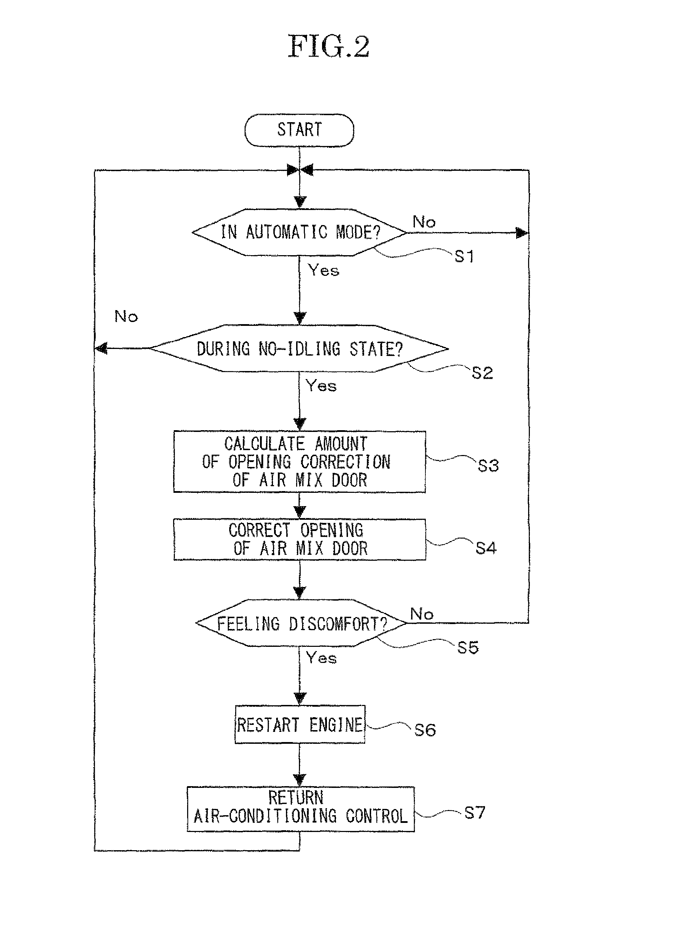

Operation of the vehicle air-conditioning control apparatus according to the embodiment will be described below based on a flowchart of FIG. 2.

After starting the engine 10, when the occupant operates the air-conditioning operation unit 110, thereby to give the command for the set temperature in the vehicle's interior, the air-conditioning unit 6 starts operation.

At this time, it is assumed that the air-conditioning unit 6 operates in automatic mode. The automatic mode refers to the mode in which the operating status of the compressor 30, the state of the intake door 40, the fan speed of the blower fan 50, the position of the air mix door 80, or the openings of the doors 94 are controlled so that the temperature in the vehicle's interior reaches the set temperature which the occupant sets by the air-conditioning operation unit 110, based on the outside-air temperature measured by the outside-air temperature sensor 130, the vehicle's interior temperature measured by the vehicle's interior temperature sensor 132, the blow-off temperature measured by the blow-off temperature sensor 134, the amount of solar radiation measured by the solar radiation quantity sensor 136, the cooling water temperature of the engine 10 measured by the water temperature sensor 138, and the air temperature after passing through the evaporator measured by the evaporator temperature sensor 139.

At step S1 of FIG. 2, the air-conditioning controller 100 checks whether the state of operation of the air-conditioning unit 6 is in the automatic mode, and thereafter, the air-conditioning controller 100 performs air-conditioning control described below, only when the air-conditioning unit 6 is in the automatic mode.

When the vehicle 5 enters a stopped state, under control of the idle-reduction controller 20, a decision is made as to whether or not no-idling conditions are satisfied, and, if the no-idling conditions are satisfied, a transition to a no-idling state is made, thus stopping the engine 10.

Then, at step S3 of FIG. 2, the air-conditioning controller 100 calculates the amount of opening correction of the air mix door 80.

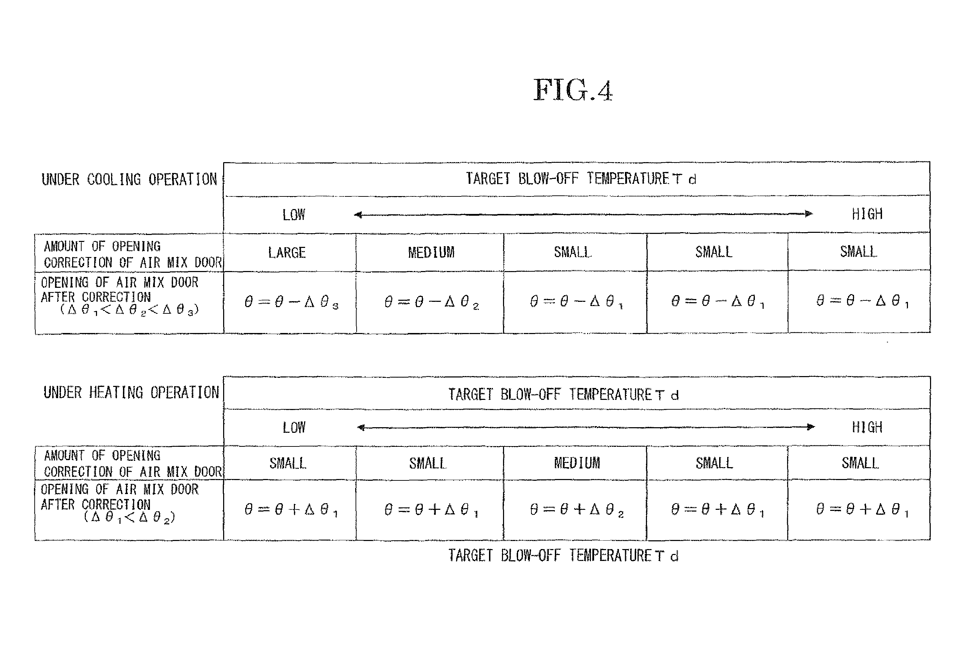

Calculation of the amount of opening correction of the air mix door 80 is performed based on a map shown in FIG. 4. The map of FIG. 4 is stored in the air-conditioning controller 100, and provides the amount of opening correction of the air mix door 80 predetermined for every cooling operation or heating operation, according to a target blow-off temperature Td calculated from a set temperature Ta in the vehicle's interior for which the air-conditioning operation unit 110 provides a command before the no-idling state, and a vehicle's interior temperature Tb measured by the vehicle's interior temperature sensor 132 during the no-idling state.

In a horizontal direction of FIG. 4, there is given the target blow-off temperature Td calculated from the set temperature Ta in the vehicle's interior and the vehicle's interior temperature Tb, and there are set the amount of opening correction Δθi of the air mix door 80 and the direction of opening correction thereof corresponding to each target blow-off temperature Td.

Specifically, the map of FIG. 4 indicates that opening correction is provided for the opening θ of the air mix door 80 before the no-idling state, by any one of the amount of first opening correction Δθ₁, the amount of second opening correction Δθ₂, and the amount of third opening correction Δθ₃ (Δθ₁ < Δθ₂ < Δθ₃), according to a control state (or a cooling state or a heating state) of the air-conditioning unit 6.

At step S3 of FIG. 2, under control of the air-conditioning controller 100, reference is made to the set temperature Ta set by the air-conditioning operation unit 110 and, further, the vehicle's interior temperature Tb is read by the vehicle's interior temperature sensor 132, and the target blow-off temperature Td is calculated from the set temperature Ta in the vehicle's interior and the vehicle's interior temperature Tb. Specifically, with the air-conditioning unit 6 mounted on the vehicle 5, the target blow-off temperature Td according to the set temperature Ta in the vehicle's interior and the vehicle's interior temperature Tb during the no-idling state is determined beforehand by experiment and stored in the air-conditioning controller 100, and the target blow-off temperature Td is calculated by referring to this information.

Then, the amount of opening correction of the air mix door 80 and the direction of correction thereof are calculated by referring to a corresponding location in the map of the amount of opening correction of the air mix door of FIG. 4, based on the calculated target blow-off temperature Td.

Then, at step S4 of FIG. 2, opening correction of the air mix door 80 is provided based on the amount of opening correction of the air mix door 80 previously determined. This correction is accomplished by transmitting the calculated amount of opening correction of the air mix door 80 to the air mix door driving unit 82, and swinging the air mix door driving unit 82 in a predetermined direction of correction by an amount equivalent to the amount of opening correction.

Thus, when the air-conditioning unit 6 is under cooling operation before the no-idling state, the air mix door 80 is swung to the cool side and is thereby corrected in a direction in which the mixture ratio between the cool air that has passed only through the evaporator 60 and the warm air that has passed through the heater core 70 after passing through the evaporator 60 is such that the cool air is increased, which in turn enables preventing a rise in the blow-off temperature and hence prolonging a period of time in which a feeling of coolness is sustainable even after the stopping of the engine 10.

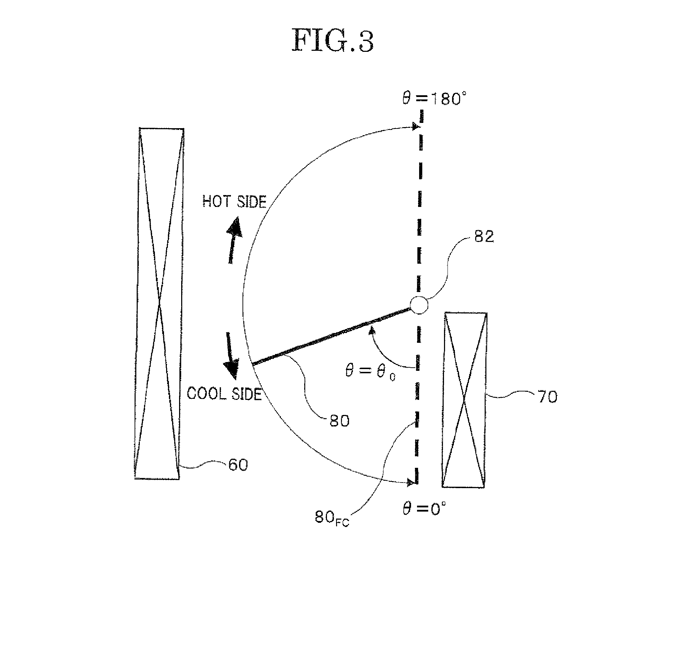

Incidentally, at this time, when during the no-idling state the target blow-off temperature Td is equal to or less than a predetermined temperature and the opening θ of the air mix door lies on the cool side by a predetermined or greater angle, the opening of the air mix door 80 may be corrected to a position where the air mix door 80 blocks the heater core 70 as viewed from the evaporator 60 side (i.e. a position indicated at 80_{FC} in FIG. 3, that is, a position at which θ is equal to 0° (θ = 0°), hereinafter referred to as a full cool position). Thereby, the cool air that has passed through the evaporator 60 bypasses the heater core 70 and is blown, which in turn, even after the stopping of the engine 10, further keeps on with a state in which the cool air is blown off, thus enabling further prolongation of the period of time in which the feeling of coolness is sustainable.

Also, when the air-conditioning unit 6 is under heating operation before the no-idling state, the air mix door 80 is swung to the hot side and is thereby corrected in a direction in which the mixture ratio between the cool air that has passed only through the evaporator 60 and the warm air that has passed through the heater core 70 after passing through the evaporator 60 is such that the warm air is increased, which in turn enables preventing a drop in the blow-off temperature and hence prolonging a period of time in which a feeling of warmth is sustainable even after the stopping of the engine 10.

Here, at the time of the opening correction of the air mix door 80, when the opening of the air mix door 80 after the correction falls outside a range of from 0° to 180°, both inclusive, (0° ≤ θ ≤ 180°), the opening is set to a predetermined opening, that is, θ is set equal to 0° (θ = 0°) when θ is less than 0° (θ < 0°), or θ is set equal to 180° (θ = 180°) when θ is more than 180° (θ > 180°).

Then, at step S5 of FIG. 2, under control of the air-conditioning controller 100, a decision is made as to whether or not air conditioning in the vehicle's interior is in a state in which the occupant feels discomfort. This is due to the fact that, when the air conditioning in the vehicle's interior enters the state in which the occupant feels the discomfort, the no-idling state is released to restart the engine 10.

The decision as to whether or not the air conditioning in the vehicle's interior is in the state in which the occupant feels the discomfort may be accomplished for example by detecting that during cooling operation a blow-off temperature Tc measured by the blow-off temperature sensor 134 exceeds a predetermined value, or that during heating operation the blow-off temperature Tc measured by the blow-off temperature sensor 134 is less than a predetermined value, or alternatively, by detecting that an absolute value of a difference between the vehicle's interior temperature Tb and the set temperature Ta in the vehicle's interior exceeds a predetermined value.

If at step S5 of FIG. 2 a decision is made that the air conditioning in the vehicle's interior is in the state in which the occupant feels the discomfort, under control of the idle-reduction controller 20, the engine 10 restarts to exit from the no-idling state (at step S6 of FIG. 2). Also, if at step S5 of FIG. 2 a decision is made that the air conditioning in the vehicle's interior is not in the state in which the occupant feels the discomfort, control returns to step S1.

Incidentally, although not shown in FIG. 2, the engine 10 may restart according to conditions other than the state of air conditioning (e.g. accelerator operation by the occupant, a reduction in the amount of battery remaining, and so on).

When the engine 10 restarts at step S6 of FIG. 2, under control of the air-conditioning controller 100, control on the state of air conditioning is returned to the state in the automatic mode before the no-idling state (at step S7 of FIG. 2), and returns again to step S1.

Incidentally, in the above description, the target blow-off temperature Td is calculated from the set temperature Ta in the vehicle's interior for which the air-conditioning operation unit 110 provides the command before the no-idling state, and the vehicle's interior temperature Tb measured by the vehicle's interior temperature sensor 132 during the no-idling state; however, the target blow-off temperature Td may be calculated, additionally taking into account the outside-air temperature measured by the outside-air temperature sensor 130, and the amount of solar radiation measured by the solar radiation quantity sensor 136. Thereby, the target blow-off temperature Td can be set in finer increments according to the environment in which the vehicle 5 is placed. Incidentally, the amount of opening correction of the air mix door 80 given in the horizontal direction of the map of FIG. 4 can also be set in correspondingly finer increments, and thereby, during the no-idling state, finer air-conditioning control can be performed according to the environment in which the vehicle 5 is placed.

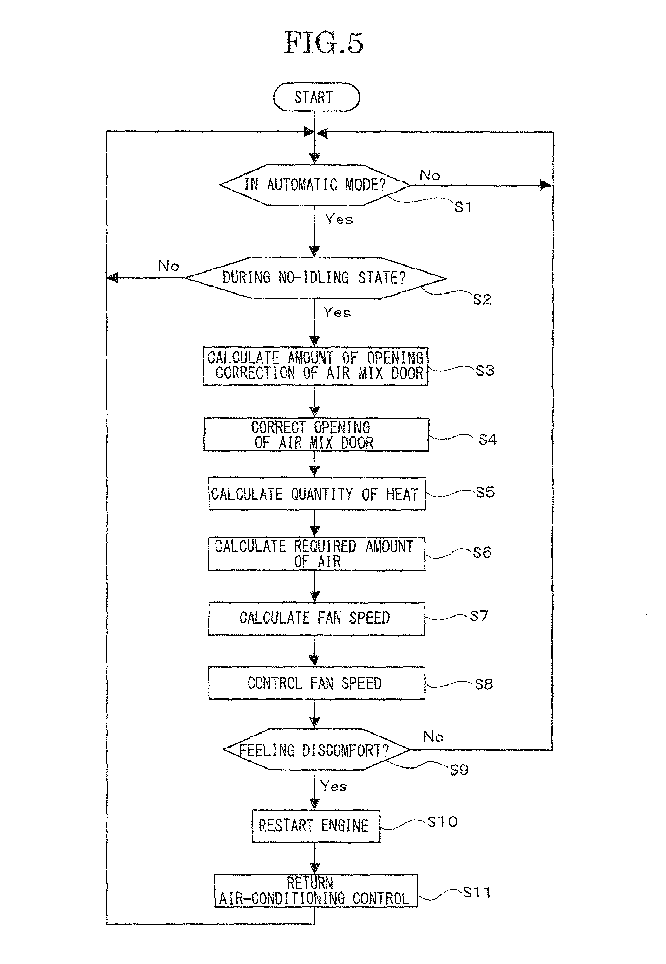

Also, in the above-described embodiment, in addition, control may, in conjunction, be performed to reduce the fan speed of the blower fan 50 so as to provide a quantity of heat equal to that in a state before the opening correction of the air mix door 80, to the occupant. This control is performed in a manner as shown in FIG. 5.

Before and at step S4 of FIG. 5, the same processing as that of FIG. 2 is performed. After that, the air-conditioning controller 100 calculates a quantity of heat Q provided to the occupant, in the state before the opening correction of the air mix door 80 (at step S5 of FIG. 5).

The quantity of heat Q is calculated from the blow-off temperature Tc before the opening correction of the air mix door 80, and the amount of air that reaches the blow-off openings 92 before the opening correction of the air mix door 80.

Here, the amount of air that reaches the blow-off openings 92 before the opening correction of the air mix door 80 is calculated by measuring beforehand a relationship between the fan speed of the blower fan 50 (or the revolving speed of the fan) and the amount of air which the blower fan 50 blows into the evaporator 60 when the blower fan 50 is revolved at the fan speed, creating a map of the relationship, and referring to the map.

Then, the air-conditioning controller 100 calculates the amount of air to be provided to the occupant, after the opening correction of the air mix door 80 (at step S6 of FIG. 5).

The amount of air is calculated, assuming that, before and after the opening correction of the air mix door 80, an equal quantity of heat Q is provided to the occupant. Specifically, the amount of air is calculated from the quantity of heat Q calculated at step S5, and the blow-off temperature Tc after the opening correction of the air mix door 80.

Subsequently, the air-conditioning controller 100 calculates the fan speed of the blower fan 50 required to produce the amount of air calculated at step S6 (at step S7 of FIG. 5). The fan speed is calculated by referring to the above-mentioned map showing the relationship between the fan speed of the blower fan 50 and the amount of air.

Further, under control of the air-conditioning controller 100, revolution speed of the blower motor 52 is controlled so that the fan speed calculated at step S7 of FIG. 5 is reached, and thereby, the blower fan 50 is controlled to a predetermined fan speed (at step S8 of FIG. 5).

Incidentally, at this time, making a sharp change in the fan speed causes a sharp change in the amount of air, which in turn may possibly give a feeling of discomfort to the occupant, and therefore, the fan speed is gradually changed with time by a command of the air-conditioning controller 100.

Then, at and after step S9 of FIG. 5, the same processing as that at and after step S5 of FIG. 2 previously described is performed.

Thus, in conjunction with the opening correction of the air mix door 80, control is performed to reduce the fan speed of the blower fan 50 and thereby provide the quantity of heat equal to that in the state before the opening correction of the air mix door 80, to the occupant. Thereby, when the compressor is stopped during cooling operation, the amount of air fed from the blower fan to the evaporator is reduced thereby to suppress a rise in temperature of the evaporator, thus enabling further prolongation of the period of time in which the feeling of coolness is sustainable, and also, further prolongation of a period of time that elapses before a restart of the engine. Also, when the compressor is stopped during heating operation, the amount of air fed from the blower fan to the heater core is reduced thereby to suppress a drop in the temperature of the cooling water, thus enabling further prolongation of the period of time in which the feeling of warmth is sustainable, and also, further prolongation of the period of time that elapses before the restart of the engine.

As described above, the vehicle air-conditioning control apparatus according to the first embodiment is configured as follows. When the no-idling state is established during cooling operation, under the command of the air-conditioning controller 100, the opening of the air mix door 80 is corrected to the cool side, and is thus corrected in the direction in which the mixture ratio between the cool air that has passed only through the evaporator 60 and the warm air that has passed through the heater core 70 after passing through the evaporator 60 is such that the cool air is increased, thereby enabling prolongation of the period of time in which the feeling of coolness is sustainable. When the no-idling state is established during heating operation, under the command of the air-conditioning controller 100, the opening of the air mix door 80 is corrected to the hot side, and is thus corrected in the direction in which the mixture ratio between the cool air that has passed only through the evaporator 60 and the warm air that has passed through the heater core 70 after passing through the evaporator 60 is such that the warm air is increased, thereby enabling prolongation of the period of time in which the feeling of warmth is sustainable.

Also, in conjunction with the opening correction of the air mix door 80, the control is performed to reduce the fan speed of the blower fan 50, thereby enabling further prolongation of the period of time in which the feeling of coolness or the feeling of warmth is sustainable, and also enabling further extension of a time duration of the no-idling state, thus achieving the advantageous effect of being able to achieve further improvement in fuel economy.

Incidentally, when the air-conditioning controller 100 confirms that the vehicle 5 is in the no-idling state, the air-conditioning controller 100 determines whether the intake door 40 is in a state of introduction of the outside air through the outside-air inlet 44 or in a state of circulation of the interior air through the interior-air inlet 46, and, if the intake door 40 is in the state of introduction of the outside air through the outside-air inlet 44, the air-conditioning controller 100 controls the intake door driving unit 42 thereby to effect swinging of the intake door, close the outside-air inlet 44, and change the intake door to the state of circulation of the interior air through the interior-air inlet 46, and thereafter, the above-mentioned processing of FIG. 2 or FIG. 5 may be performed.

By thus performing opening control on the intake door, during the no-idling state, the intake door is switched to a position of interior-air circulation to thus block the introduction of the outside air that can possibly cause a rise or drop in the temperature in the vehicle's interior, thereby reducing the likelihood of occurrence of temperature variations in the vehicle's interior, which in turn enables further prolongation of the period of time in which the feeling of coolness or the feeling of warmth is sustainable, and also, further prolongation of the period of time that elapses before the restart of the engine.

According to the vehicle air-conditioning control apparatus thus configured, during the no-idling state, the air-conditioning controller corrects the opening of the air mix door in a direction in which the mixture ratio between the cool air that has passed only through the evaporator and the warm air warmed by passing through the heater core after passing through the evaporator is such that a period of time in which the state of air conditioning in the vehicle's interior before the no-idling state is sustainable is prolonged, based on the state of air conditioning before the no-idling state and the target blow-off temperature calculated using at least the set temperature for which the air-conditioning operation unit provides the command before the no-idling state and the temperature in the vehicle's interior measured by the vehicle's interior temperature sensor during the no-idling state. Thus, during the no-idling state, the period of time in which the state of air conditioning is sustainable can be prolonged.

When the air-conditioning controller performs control to cool the vehicle's interior before the no-idling state, the air-conditioning controller performs, during the no-idling state, control to correct the opening of the air mix door by an amount corresponding to the target blow-off temperature, in a direction in which the mixture ratio between the cool air that has passed only through the evaporator and the warm air that has passed through the heater core after passing through the evaporator is such that the amount of the cool air is increased.

According to the vehicle air-conditioning control apparatus thus configured, when the no-idling state is established during cooling operation, the air-conditioning controller corrects the opening of the air mix door in the direction in which the mixture ratio between the cool air that has passed only through the evaporator and the warm air that has passed through the heater core after passing through the evaporator is such that the cool air is increased (hereinafter referred to as the cool side), thus enabling prolongation of the period of time in which the feeling of coolness is sustainable during the no-idling state.

When during the no-idling state the target blow-off temperature is equal to or less than a predetermined value and during the no-idling state the opening of the air mix door is in a state in which the mixture ratio is such that the amount of the cool air is larger than the amount of the warm air by a predetermined value or more, the air-conditioning controller performs control to correct the opening of the air mix door to a position where the air mix door blocks the heater core as viewed from the evaporator side.

According to the vehicle air-conditioning control apparatus thus configured, during the no-idling state, the air-conditioning controller detects that the target blow-off temperature is equal to or less than the predetermined value, and that the opening of the air mix door is in the state in which the mixture ratio between the cool air that has passed only through the evaporator and the warm air that has passed through the heater core after passing through the evaporator is such that the amount of the cool air is larger than the amount of the warm air by the predetermined value or more, and the air-conditioning controller corrects the opening of the air mix door to the position where the air mix door blocks the heater core as viewed from the evaporator side. Thus, the air that has passed through the evaporator bypasses the heater core and is blown into the vehicle's interior, thereby enabling further prolongation of the period of time in which the feeling of coolness is sustainable during the no-idling state.

When the air-conditioning controller performs control to heat the vehicle's interior before the no-idling state, the air-conditioning controller performs, during the no-idling state, control to correct the opening of the air mix door by an amount corresponding to the target blow-off temperature, in a direction in which the mixture ratio between the cool air that has passed only through the evaporator and the warm air that has passed through the heater core after passing through the evaporator is such that the amount of the warm air is increased.

According to the vehicle air-conditioning control apparatus thus configured, when the no-idling state is established during heating operation, the air-conditioning controller corrects the opening of the air mix door in the direction in which the mixture ratio between the cool air that has passed only through the evaporator and the warm air that has passed through the heater core after passing through the evaporator is such that the warm air is increased (hereinafter referred to as the hot side), thus enabling prolongation of the period of time in which the feeling of warmth is sustainable during the no-idling state.

During the no-idling state, the air-conditioning controller performs control to reduce the fan speed of the blower fan to a predetermined speed.

According to the vehicle air-conditioning control apparatus thus configured, during the no-idling state, the air-conditioning controller performs the control to reduce the fan speed of the blower fan to the predetermined speed. Thus, the amount of air fed from the blower fan to the evaporator or the heater core is reduced thereby to suppress a rise in the temperature of the evaporator during cooling operation, thus enabling further prolongation of the period of time in which the feeling of coolness is sustainable. Moreover, the further prolongation of the period of time in which the feeling of coolness is sustainable enables prolongation of the period of time that elapses before the restart of the engine. Also, during heating operation, a drop in the temperature of the cooling water is suppressed, thereby enabling further prolongation of the period of time in which the feeling of warmth is sustainable. Moreover, the further prolongation of the period of time in which the feeling of warmth is sustainable enables prolongation of the period of time that elapses before the restart of the engine.

The air-conditioning controller performs control to gradually reduce the fan speed of the blower fan with time until the fan speed reaches the predetermined speed.

According to the vehicle air-conditioning control apparatus thus configured, the air-conditioning controller controls the fan speed of the blower fan to gradually reduce the fan speed with time until the fan speed reaches the predetermined speed. Thus, the amount of air fed from the blower fan to the evaporator or the heater core becomes progressively smaller, so that air-conditioning control can be performed without a sharp change in the amount of air giving a feeling of discomfort to the occupant.

The air-conditioning controller performs control to correct the opening of the air mix door during the no-idling state, using a map showing the direction and amount of correction of the opening of the air mix door, previously created based on the state of air conditioning before the no-idling state, the set temperature, and the target blow-off temperature.

According to the vehicle air-conditioning control apparatus thus configured, the amount of opening correction of the air mix door can be determined based on the previously created map, and thus, correction of the opening of the air mix door can be executed easily without complicated calculation for every correction.

During the no-idling state, the air-conditioning controller performs control to change the position of the intake door to such a position that the air outside the vehicle is not introduced.

According to the vehicle air-conditioning control apparatus thus configured, during the no-idling state, the air-conditioning controller switches the intake door to the position of interior-air circulation where the air outside the vehicle (or the outside air) is not introduced, to thus block the introduction of the outside air that can possibly cause a rise or drop in the temperature in the vehicle's interior, thereby reducing the likelihood of occurrence of temperature variations in the vehicle's interior, which in turn enables further prolongation of the period of time in which the feeling of coolness or the feeling of warmth is sustainable, and also, further prolongation of the period of time that elapses before the restart of the engine.

As described above, according to the vehicle air-conditioning control apparatus according to the present invention, even when the engine is stopped by the idle-reduction function and thereby the compressor is stopped, the opening of the air mix door is corrected in such a direction as to prolong the period of time in which the state of air conditioning in the vehicle's interior is sustainable, thereby enabling prolongation of the period of time in which the feeling of coolness or the feeling of warmth of the occupant is sustainable.

## Claims

1. A vehicle air-conditioning control apparatus comprising:
an intake door (40) mounted on a vehicle having an idle-reduction function, the intake door making selection between introduction of air outside the vehicle and introduction of air inside the vehicle, with an opening of the intake door;
a blower fan (50) that controls an amount of the air introduced through the intake door, with a fan speed of the blower fan;
an evaporator (60) that cools the air blown by the blower fan, by using a refrigerant;
a heater core (70) that allows a further passage of the air that has passed through the evaporator, and warms the air by using engine cooling water of the vehicle;
an air mix door (80) that adjusts a mixture amount of cool air cooled by passing only through the evaporator and warm air warmed by passing through the heater core after passing through the evaporator, with an opening of the air mix door;
a vehicle's interior temperature sensor (132) that measures temperature in a vehicle's interior;
an air-conditioning operation unit (110) that provides a command for a set temperature in the vehicle's interior; and
an air-conditioning controller (100) that performs control on the state of air conditioning in the vehicle's interior,
wherein, before a no-idling state, the air-conditioning controller performs the control on the state of air conditioning in the vehicle's interior, based on at least the set temperature for which the air-conditioning operation unit provides the command, and, during the no-idling state, the air-conditioning controller performs control to correct the opening of the air mix door in such a direction as to prolong a period of time in which the state of air conditioning in the vehicle's interior before the no-idling state is sustainable, based on the state of air conditioning before the no-idling state and a target blow-off temperature calculated using at least the set temperature and the temperature in the vehicle's interior measured by the vehicle's interior temperature sensor during the no-idling state.

2. The vehicle air-conditioning control apparatus according to claim 1, wherein
when the air-conditioning controller (100) performs control to cool the vehicle's interior before the no-idling state, the air-conditioning controller performs, during the no-idling state, control to correct the opening of the air mix door by an amount corresponding to the target blow-off temperature, in a direction in which a mixture ratio between the cool air that has passed only through the evaporator (60) and the warm air that has passed through the heater core (70) after passing through the evaporator is such that the amount of the cool air is increased.

3. The vehicle air-conditioning control apparatus according to claim 2, wherein
when during the no-idling state the target blow-off temperature is equal to or less than a predetermined value and during the no-idling state the opening of the air mix door (80) is in a state in which the mixture ratio is such that the amount of the cool air is larger than the amount of the warm air by a predetermined value or more, the air-conditioning controller performs control to correct the opening of the air mix door to a position where the air mix door blocks the heater core as viewed from the evaporator side.

4. The vehicle air-conditioning control apparatus according to claim 1, wherein
when the air-conditioning controller performs control to heat the vehicle's interior before the no-idling state, the air-conditioning controller performs, during the no-idling state, control to correct the opening of the air mix door (80) by an amount corresponding to the target blow-off temperature, in a direction in which the mixture ratio between the cool air that has passed only through the evaporator (60) and the warm air that has passed through the heater core (70) after passing through the evaporator is such that the amount of the warm air is increased.

5. The vehicle air-conditioning control apparatus according to claim 1, wherein
during the no-idling state, the air-conditioning controller performs control to reduce the fan speed of the blower fan (50) to a predetermined speed.

6. The vehicle air-conditioning control apparatus according to claim 5, wherein
the air-conditioning controller performs control to gradually reduce the fan speed of the blower fan (50) with time until the fan speed reaches the predetermined speed.

7. The vehicle air-conditioning control apparatus according to claim 1, wherein
the air-conditioning controller (100) performs control to correct the opening of the air mix door (80) during the no-idling state, using a map showing the direction and amount of correction of the opening of the air mix door, previously created based on the state of air conditioning before the no-idling state, the set temperature, and the target blow-off temperature.

8. The vehicle air-conditioning control apparatus according to claim 1, wherein
during the no-idling state, the air-conditioning controller (100) performs control to change the position of the intake door (40) to such a position that the air outside the vehicle is not introduced.
